# EUROPEAN PATENT APPLICATION

(11) **EP 2 485 159 A1**
(43) Date of publication of application: **08.08.2012**
(21) Application number: 11153097.8
(22) Date of filing: 02.02.2011
(51) Int. Cl.: G06F 17/30, G06Q 30/00, H04L 29/08

(54) **Method, device and system for social media communications across a plurality of computing devices**

(71) Applicant: Research in Motion Corporation, Wilmington, DE 19801 (US)
(72) Inventor: Mori, Robert, Redwood City CA 94065 (US); Wilson, Jason, Luke, Mill Valley, CA 94941 (US)
(74) Representative: MERH-IP Matias Erny Reichl Hoffmann

(57) **Abstract**

The present specification provides a method, device and system to allow a plurality of devices and recommendation engines to participate in generating a media playlist. Playlist recommendations can be augmented with related yet novel content that is not contemplated by the recommendation engines. Media may comprise one or more of music, audio, video and text.

## Description

### FIELD

The present specification relates generally to computing devices and more specifically relates to a device, method and system for social media communications across a plurality of computing devices.

### BACKGROUND

Facebook^{TM,} Twitter^{TM} and other social networking sites mark another significant advance in Internet communications as a technology platform for social networking. In parallel, Last.fm and Pandora^{®} and other Internet radio sites mark a significant advance in lnternet communications as a technology platform for music distribution.

### SPECIFICATION

An aspect of this specification provides a method for social media communications in a root electronic device comprising: receiving at the root electronic device an identifier for a recommendation engine configured to recommend media based on a seed media; receiving at the root electronic device identifiers at the root electronic device for a set of child electronic devices; receiving at the root electronic device at least one seed media; sending the at least one seed media to a recommendation engine from the root electronic device; receiving at the root electronic device at least one recommended media back from the recommendation engine in response to the at least one defined seed; the at least one recommendation engine executing a recommendation algorithm; receiving at the root electronic device at least one alternative recommended media to the at least one recommended media from at least one of the child electronic devices; receiving at the root electronic device input representing a selection of the at least one alternative recommended media; and, sending the selection to the recommendation engine to generate at least one further recommended media based on the selection.

The media may comprise one or more of music, audio, video or text.

The seed media may comprise a plurality of works.

The seed media may be identified based on one or more of an artist, a title, a publisher, or a genre.

The method may further comprise receiving at the root electronic device at least one additional recommendation engine configured to suggest the at least one alternative recommended media.

The at least one alternative recommended media from one of the child devices may be generated by a recommendation engine associated with the one of the child devices.

The method may further comprise automatically playing the at least one recommended media when it is received from the recommendation engine.

The method may further comprise automatically playing the at least one alternative recommended media that corresponds to the selection.

The method may further comprise automatically playing the at least one alternative recommended media that corresponds to the selection.

The method may further comprise displaying identifying information about the recommended media.

The media can be music and the identifying information may comprise one or more of the artist, the album name, the composer(s), the performer(s), the lyrics, the genre, and album art work.

The method may further comprise generating a feed cumulative of all the recommended media and all the alternative recommended media.

Another aspect of this specification provides a computer readable medium comprising a plurality of programming instructions according to the foregoing.

Another aspect of this specification provides a root electronic device configured according to any of the foregoing.

Another aspect of this specification provides a child electronic device configured according any of the foregoing.

### BRIEF DESCRIPTION OF THE DRAWINGS

Figure 1 is a schematic representation of a front view of an exemplary portable electronic device.

Figure 2 is a block diagram of the electronic components of the device shown in Figure 1.

Figure 3 is a block diagram of an exemplary system for social media communications.

Figure 4 is a flow chart depicting a method for social media communications.

Figure 5 is a flow chart depicting a non-limiting example of how certain aspects of the method of Figure 4 can be implemented.

Figure 6 is a flow chart depicting a non-limiting example of how certain aspects of the method of Figure 4 can be implemented.

Figure 7 is a non-limiting example of a display controlled to generate output and to prompt for input that can be used in conjunction with certain aspects of the method of Figure 4.

Figure 8 is a non-limiting example of a display controlled to generate output and to prompt for input that can be used in conjunction with certain aspects of the method of Figure 4.

Figure 9 is a non-limiting example of a display controlled to generate output and to prompt for input that can be used in conjunction with certain aspects of the method of Figure 4.

Figure 10 is a non-limiting example of a display controlled to generate output and to prompt for input that can be used in conjunction with certain aspects of the method of Figure 4.

### DETAILED DESCRIPTION OF THE EMBODIMENTS

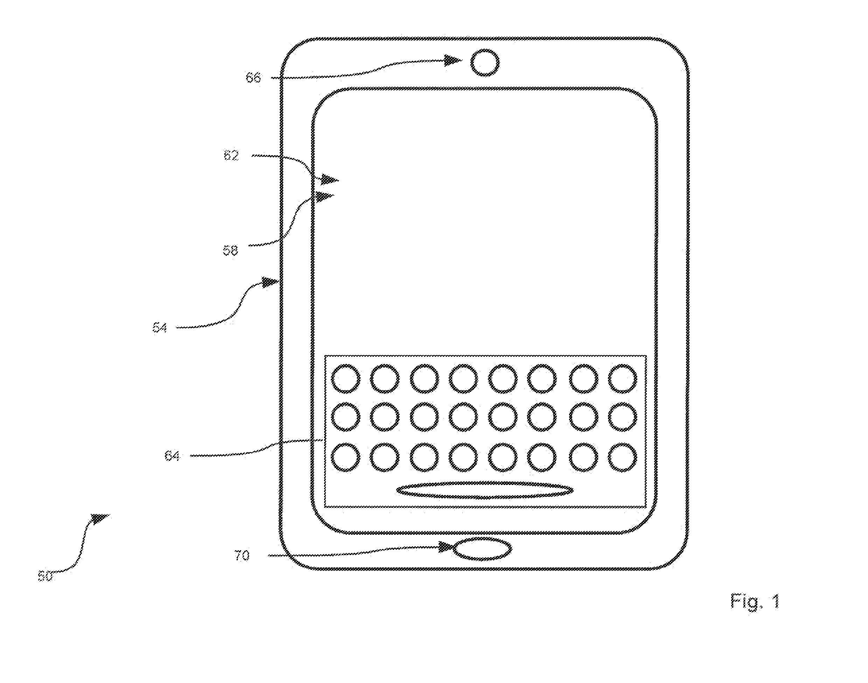

Figure 1 is a schematic representation of a non-limiting example of a portable electronic device 50 which can be used for social media communications with similar devices, as discussed in greater detail below. It is to be understood that portable electronic device 50 is an example, and it will be apparent to those skilled in the art that a variety of different portable electronic device structures are contemplated. Indeed variations on portable electronic device 50 can include, without limitation, a cellular telephone, a portable email paging device, a camera, a portable music player, a portable video player, a personal digital assistant, a portable book reader, a portable video game player, a tablet computer, a netbook computer, or a laptop computer. Other contemplated variations include devices which are not necessarily portable, such as desktop computers.

Referring to Figure 1, device 50 comprises a chassis 54 that supports a display 58. Display 58 can comprise one or more light emitters such as an array of light emitting diodes (LED), liquid crystals, plasma cells, or organic light emitting diodes (OLED). Other types of light emitters are contemplated. A touch-sensitive membrane 62 is overlaid on display 58 to thereby provide an input device for device 50. As a non-limiting example, device 50 can be configured to selectively show or hide a virtual keyboard 64. Other types of input devices, other than touch membrane 62, or in addition to touch membrane 62, are contemplated. For example, a physical keyboard, or touch-pad, or joystick or trackball or track-wheel, a microphone, or optical camera or any one or more of them can be provided, in addition to or in lieu of touch membrane 62. Such other components may, if desired, be "slide-out" components. In a present implementation, device 50 also comprises a speaker 66 for generating audio output. Speaker 66 may be implemented as, or augmented with, a wired or wireless headset or both.

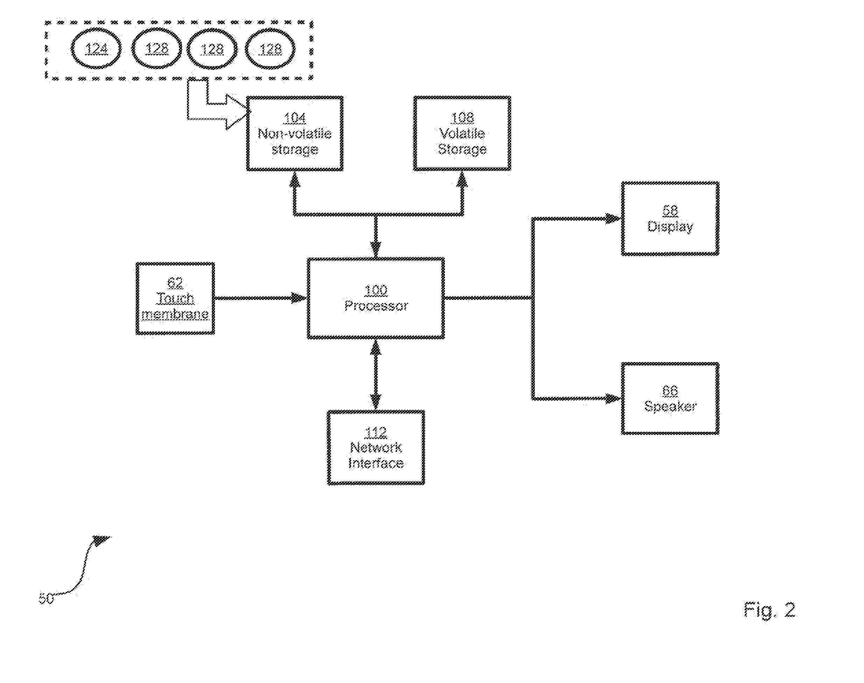

Figure 2 shows a schematic block diagram of the electronic components of device 50. It should be emphasized that the structure in Figure 2 is a non-limiting example. Device 50 includes at least one input device which in a present embodiment includes touch membrane 62. As noted above, other input devices are contemplated. Input from touch membrane 62 is received at a processor 100. In variations, processor 100 may be implemented as a plurality of processors. Processor 100 can be configured to execute different programming instructions that can be responsive to the input received via the one or more input devices. To fulfill its programming functions, processor 100 is also configured to communicate with at least one non-volatile storage unit 104 (e.g., Erasable Electronic Programmable Read Only Memory ("EEPROM"), Flash Memory) and at least one volatile storage unit 108 (e.g. random access memory ("RAM")). Programming instructions that implement the functional teachings of device 50 as described herein are typically maintained, persistently, in non-volatile storage unit 104 and used by processor 100 which makes appropriate utilization of volatile storage 108 during the execution of such programming instructions.

Processor 100 in turn is also configured to control display 58 and speaker 66 and any other output devices that may be provided in device 50, also in accordance with different programming instructions and responsive to different input receive from the input devices.

Processor 100 also connects to a network interface 112, which can be implemented in a present embodiment as a radio configured to communicate over a wireless link, although in variants device 50 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such a link. Present, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers ("IEEE") standard 802.11, Bluetooth^{™} or any of their variants or successors. It is also contemplated each network interface 112 can include multiple radios to accommodate the different protocols that may be used to simultaneously or individually communicate over different types of links.

As will become apparent further below, device 50 can be implemented with different configurations than described, omitting certain input devices or including extra input devices, and likewise omitting certain output devices or including extra input devices.

In a present embodiment, device 50 is also configured to maintain, within non-volatile storage 104, a social media application 124 and optionally, one or more additional applications 128. Social media application 124 and the one or more additional applications 128 can be prestored in non-volatile storage 104 upon manufacture of device 50, or downloaded via network interface 112 and saved on non-volatile storage 104 at any time subsequent to manufacture of device 50. As will be explained further below, social media application 124 can be used to interact with other devices that are also configured to execute their own version of social media application 124. Such other devices may be identical to, or variations of device 50, as discussed above. Social media application 124 can also be integrated with existing social media applications, such as Facebook^{™}, Twitter^{™}, or BlackBerry Instant Messenger.

Processor 100 is configured to execute social media application 124, accessing non-volatile storage 104 and volatile storage 108 as needed. Social media application 124 includes the functionality to generate such media on device 50 making appropriate use of speaker 66 or display 58 or both of them. As used herein, the term "media" is not particularly limited, and in the present illustrative implementation specifically contemplates music or audio. However, in other implementations, media may additionally or alternatively comprise one or more of media in the forms of video or text (e.g., an online book). Thus, in the context of music, social media application 124 can be used to play music from speaker 66 and display indexing and other information about the music, including title, artist, lyrics, etc. Further functionality of social media application 124 will be discussed further below in relation to music. However, those skilled in the art will come to appreciate that social media application 124 can be configured to manage other forms of media, notwithstanding the fact that the remainder of this specification focuses on music.

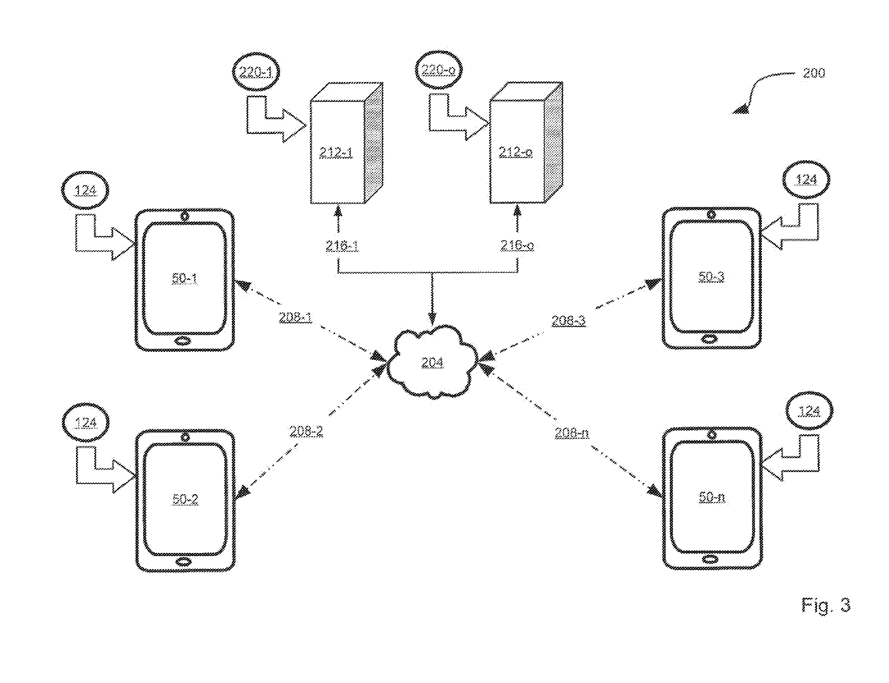

Referring now to Figure 3, a system for social media communications is indicated generally at 200. System 200 comprises a plurality of devices 50-1, 50-2, 50-3 ... 50-n. (Collectively, devices 50 and generically, device 50. This nomenclature is used elsewhere herein.) For illustrative simplicity, each device 50 is shown as identical to device 50 as described above, but each device may have a different configuration from the other, although each device includes social media application 124.

Devices 50 each connect to a network 204 via a respective link 208. Network 204 may comprise the Internet or any other type of network topology that enables communications between devices 50. Likewise, each link 208 can comprise any combination of hardware (e.g. various combinations of cabling, antennas, wireless base stations, intermediation servers, routers, etc.) and overlaid communication protocols to enable the connection between a respective device 50 and network 204.

System 200 also comprises at least one server 212-1 ... 212-o, that also connects to network 204 via respective links 216. Each server 212 can be implemented on physical hardware, or can be implemented in a cloud-computing context as a virtual server. In any event, those skilled in the art will appreciate that an underlying configuration of interconnected processor(s), non-volatile storage, volatile storage and network interface(s) are used to implement each server 212. Each server 212 is configured to execute a media recommendation engine 220. Each media recommendation engine 220 can be based on similar or different underlying media recommendation engines. Note that while media recommendation engine 220 is contemplated to be executing on a server 212 that is separate from any of the devices 50, in variations it is contemplated that the music recommendation engines could be implemented in one or more of the devices 50 and thereby obviate servers 212 altogether. Recommendation engine 220 can be based, entirely or in part, on an existing media recommendation engine, such as the recommendation engines available on last.fm, Pandora.com, Slacker, the Echonest, etc., whereby a seed song, tag, artist or other identifier is provided and based on that seed, an algorithm is implemented which recommends one or more further songs that are expected to have a high probability of interest. For example, provision of the seed "Bach" may result in the algorithm selecting an organ prelude and fugue composed by Johann Sebastian Bach. As another example, provision of the seed "Away in a Manger" may result in the algorithm selecting "Silent Night" or other Christmas carols. Those skilled in the art will now recognized other examples.

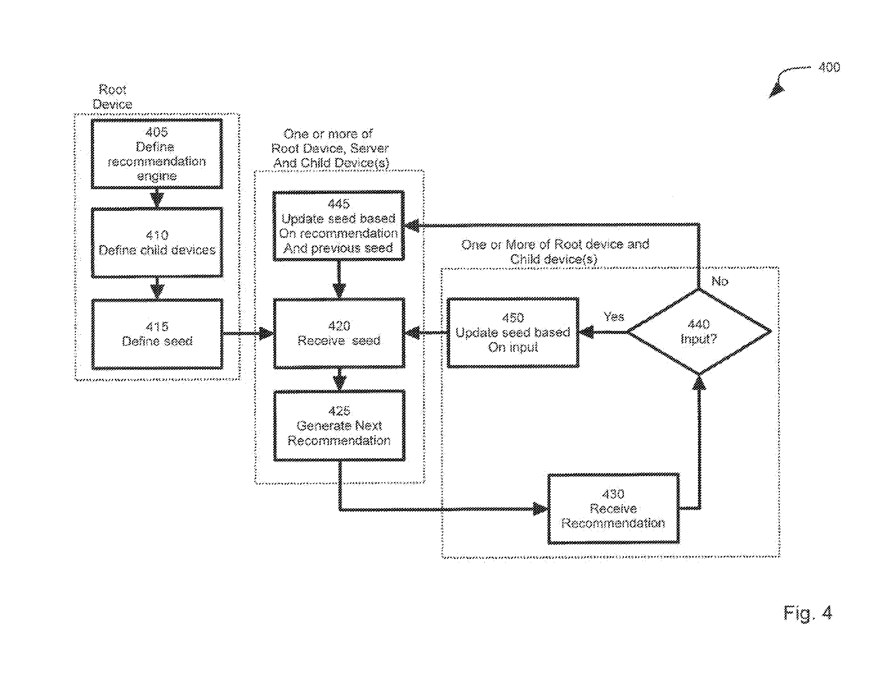

Referring now to Figure 4, a flowchart depicting a method for social media communications is indicated generally at 400. Method 400 is one way in which social media application 124 and recommendation engine 220 can be implemented. It is to be emphasized, however, that method 400 and need not be performed in the exact sequence as shown, hence the elements of method 400 are referred to herein as "blocks" rather than "steps".

Method 400 can be implemented on system 200 and accordingly, dashed-line boxes are drawn around certain blocks in method 400 to convey, by way of non-limiting example, which ones of devices 50 or servers 212 may be selected to implement those blocks. Indeed, certain blocks may be performed in parallel in one or more devices 50 or one or more servers 212 or both of them. It is also to be understood, however, that method 400 can be implemented on variations of system 200 as well.

In a present implementation, method 400 contemplates establishing one of the devices 50 as a root device, with one more of the remaining devices being defined as child devices. It will become apparent, however, that method 400 can be executed in multiple instances, each with a different device being selected as the root device. For ease of illustration, in the following discussion it will be assumed that device 50-1 is the root device.

Block 405 thus comprises defining a recommendation engine. For ease of illustration, it will be assumed that recommendation engine 220-1 is defined as the recommendation engine at block 405. However, it is to be understood that this illustration is a non-limiting example.

Block 410 comprises defining child devices. The means by which child devices are defined is not particularly limited, and can be an organic process that occurs over a period of time and can change from time to time. As an example, an identifier for another device 50 is entered into the root device 50-1 as a means identifying one or more other devices 50 that would be defined as child devices. Example identifiers for other devices 50 include absolute identifiers, such as an International Mobile Equipment Identity (lMEl), or a PIN number in the context of a BlackBerry^{™} hand-held device. Other example identifiers include relative identifiers that ultimately point to another device 50 (e.g., an email address, an International Mobile Subscriber Identity (lMSl) or a Mobile Subscriber Integrated Services Digital Network Number (MSISDN), a "friend" identifier in a social networking application such as Facebook^{™}. Other types of identifiers will now occur to those skilled in the art.

It will also now be understood that the process of defining child devices may also include an acceptance stage whereby a message is sent to proposed child devices, which requests approval via an input at those child devices that consent to being a child device is being provided. A denial of approval thereby blocks the completion of defining a child device at block 410, but an approval completes the process of defining a given device as a child device. This process is exemplified in various existing social networking applications, including, for example, Facebook^{™}, or MySpace^{™}, or BlackBerry^{™} Instant Messenger^{™}.

For illustrative purposes, it will be assumed that device 50-3 is successfully defined as a child device at block 410.

Block 415 comprises defining a media seed. As discussed above, in the context of music, a seed may comprise a title of a song, a name of an artist, a musical category, a name of an album or any other type of tag that can be used to classify music.

Block 420 comprises the reception of the seed defined at block 415. The distributed nature of method 400 becomes apparent as the device or server which processes the seed from block 415 is not particularly limited. In the present, illustrative example, it is assumed that recommendation engine 220-1 in server 212-1 was defined as the recommendation engine at block 405, and accordingly, in this illustration, block 420 is executed at server 212-1 which receives the seed provided at block 415.

Block 425 comprises generating a recommendation based on the seed from block 420. Again, in the present illustrative example, the seed from block 420 is used at block 425 to generate a recommendation according to a recommendation algorithm. Again, the nature of the algorithm is not particularly limited, and indeed block 420 and block 425 can be implemented via an existing recommendation such as last.fm, Pandora.com, or Slacker, etc.

Block 430 comprises receiving the recommendation. The recommendation is received at the root device and the child devices defined at block 410. Thus, in the illustrative example, the recommendation from block 425 is received at root device 50-1 and child device 50-3.

As part of block 430, the receiving device(s) can be configured to automatically start playing the recommendation via speaker 66, using display 58 to generate identifying information about the recommendation being played. More typically, the recommendation is available for later selection on the receiving device(s), such selection triggering an action, such as playing the recommendation, or opening up a music store service with that recommendation. Such identifying information can include one or more of the name of the recommended song, the artist, the album name, the composer(s), the performer(s), the lyrics, the genre, and album art work. More generically, as such information may relate to all types of media, the identifying information can be defined as one or more of an artist, a title, a publisher, or a genre.

Block 440 comprises determining if there has been any input received responsive to the recommendation being played. In a present implementation, such input is typically received from any one or more of the child devices. A "yes" determination at block 440 leads to block 450 at which point the seed may be updated according to the input received at block 440. Block 440 and block 445 will be explained in greater detail below.

A "no" determination at block 440 leads to block 445, at which point the seed is updated based on the recommendation from block 430 and the previous seed that lead to the recommendation at block 430. Upon updating the seed at block 445, method 400 advances to block 420 at which point the updated seed is received, and then at block 425 another recommendation is generated.

Various implementation options are possible when method 400 cycles from block 445 to block 420. One implementation option can be based on utilizing existing functionality in existing recommendation engines such as last.fm, Pandora.com, or Slacker, simply continuing to provide additional recommendations based on the seed originally defined at block 415.

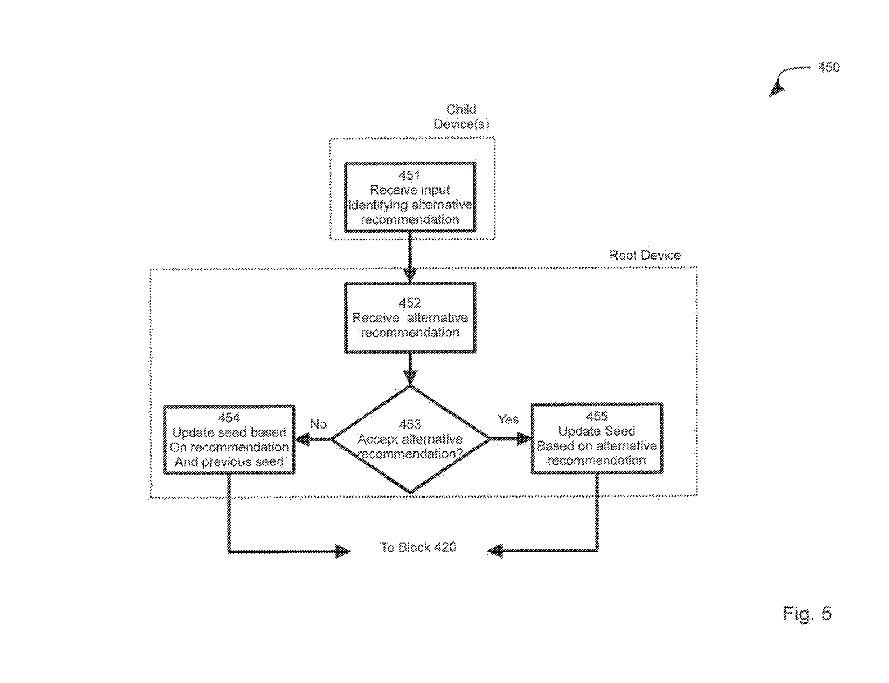

A non-limiting example of how block 450 may be implemented is shown in Figure 5. It is to be understood that block 450 from Figure 5 may be occurring at roughly the same time on a plurality of different child devices 50, where a plurality of the child device(s) provide input at block 451 which in turn is fed back to at least the root device 50-1 and utilized at block 452 by root device 50-1 and thereafter.

Thus, block 451 comprises receiving input identifying an alternative recommendation. Block 451 is implemented on one or more of the child devices 50. Block 451 contemplates that a given child device 50, having received both the seed from block 415 and the recommendation from block 425, may be able to offer an alternative recommendation that is different from the recommendation provided at block 425. The alternative recommendation may be based on manual input from the user of the child device 50, according to some preference of that user, OR, the alternative recommendation may be automatically generated by another recommendation engine (typically different from than the recommendation engine defined at block 405) which is associated with the child device 50.

Block 452 comprises receiving the alternative recommendation from block 451 at the root device. As part of block 452, the recommendation from block 451 is shown on display 58 of root device 50-1, in conjunction with at least one of the identifying information of the seed from block 415 or the recommendation from block 425.

Block 453 comprises determining whether the alternative recommendation is accepted, or not. If no input is provided at the root device 50-1, then a "no" determination is reached and there is a progression from block 453 to block 454. Block 454 comprises updating the seed based on the recommendation and the previous seed, which is substantially the same as how block 445 is performed.

If "yes" input is provided at the root device 50-1, then a "yes" determination is reached and there is a progression from block 453 to block 455. The means by which an affirmative input is provided indicating whether that alternative recommendation is accepted is not particularly limited. In one implementation, the affirmative indication may be in the form of an activation of radio button (or the like) generated beside the recommendation indicating "accept" or "like". However implemented, an affirmative indication leads to a "yes" determination at block 453 which in turn leads to block 455.

Block 455 comprises updating the seed based on the alternative recommendation that was received at block 452. The updated seed may also be based on at least one of the original recommendation from block 425 and the previous seed. At this point, block 420 resumes in method 400, but at this point the seed received at block 420 comprises the alternative recommendation and additionally may be updated based on at least one of the original recommendation and the previous seed.

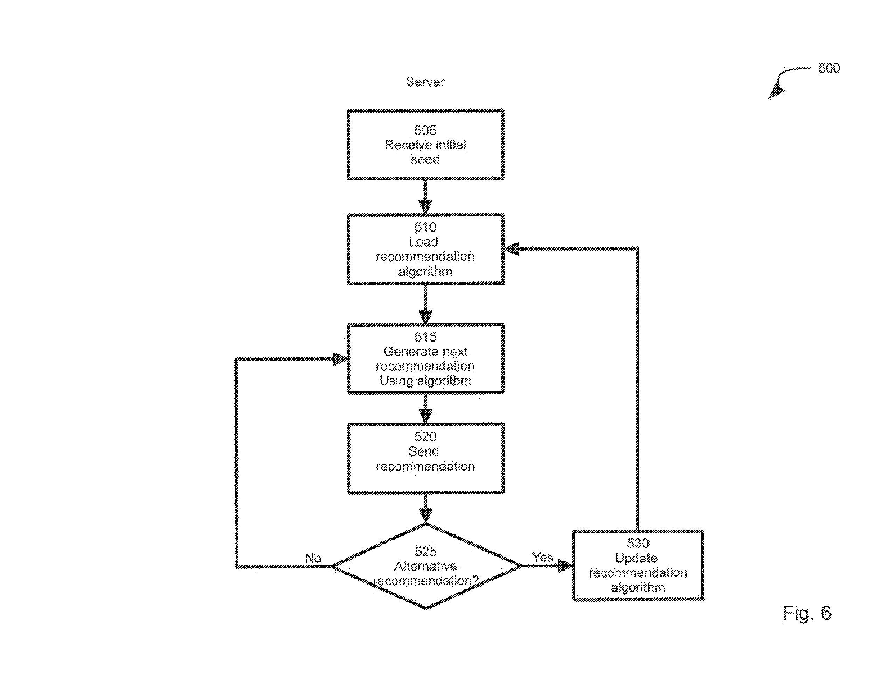

Based on the foregoing, it can now be seen that a community of devices 50 can interact with each other and at least one recommendation engine 220 and such device 50 collaboratively and remotely participate in a series of recommendations based on an initial seed. Indeed, Figure 6 shows a method 600, which is another embodiment that incidentally highlights one of the potential advantages of the present specification. Method 600 can be performed by one or more servers 212 that host a recommendation engine 220, which can not only generate a recommendation using a recommendation algorithm based on a seed, but which can also learn based on the various alternative recommendations that are offered, and which ones are also accepted or rejected.

Block 505 comprises receiving the initial seed, which is roughly analogous to the first time block 420 is reached in method 400. Block 510 comprises loading a recommendation algorithm that can utilize the seed from block 510. Block 515 comprises generating a recommendation based on the seed from block 505 and using the recommendation algorithm. The first performance of block 515 is roughly analogous to the first performance of block 425 in method 400. Block 520 comprises sending the recommendation to the root device 50 and one or more child devices 50, which again is roughly analogous to the first performance of block 430 in method 400.

Block 525 comprises determining if any alternative recommendation has been made. A "no" determination is reached at block 525 if no alternative recommendation is made, in which case method 500 cycles back to block 515. The cycling back from block 525 to block 515 is roughly analogous to the reaching of block 445 in method 400.

On the other hand, a "yes" determination is reached at block 525 if an alternative recommendation has been made in the course of performance of method 400. In one implementation, a "yes" determination is *only* reached at block 525 if a "yes" determination is reached at block 453. In another implementation, a "yes" determination is reached at block 525 if a "yes" determination is reached at block 440.

Block 530 comprises updating the recommendation algorithm loaded at block 510 to include the alternative recommendation(s) received at block 452. As will now be understood, the update can be based solely on accepted alternative recommendations, or based on both accepted and non-accepted alternative recommendations.

The means by which the recommendation algorithm is updated at block 530 is not particularly limited and can generally correspond to other parameters that are part of the algorithm. For example, the algorithm may be configured to remove from possible subsequent selection by the recommendation engine 220 any alternative recommendation that would eventually have been automatically and eventually selected by the recommendation algorithm any way. In contrast, the algorithm may be configured to add an alternative selection to the range of possible recommendations if the alternative selection could never have been originally selected according to the algorithm. On a more subtle level, the recommendation algorithm may be varied to prioritize an alternative recommendation during subsequent activations of that algorithm with the same seed.

It can also be noted that method 600 can be varied so that block 515 generates a plurality of recommendations rather than a single recommendation. Method 600 can also be varied such that the number of selected recommendations to be generated at block 515 is set via an input received at root device 50-1.

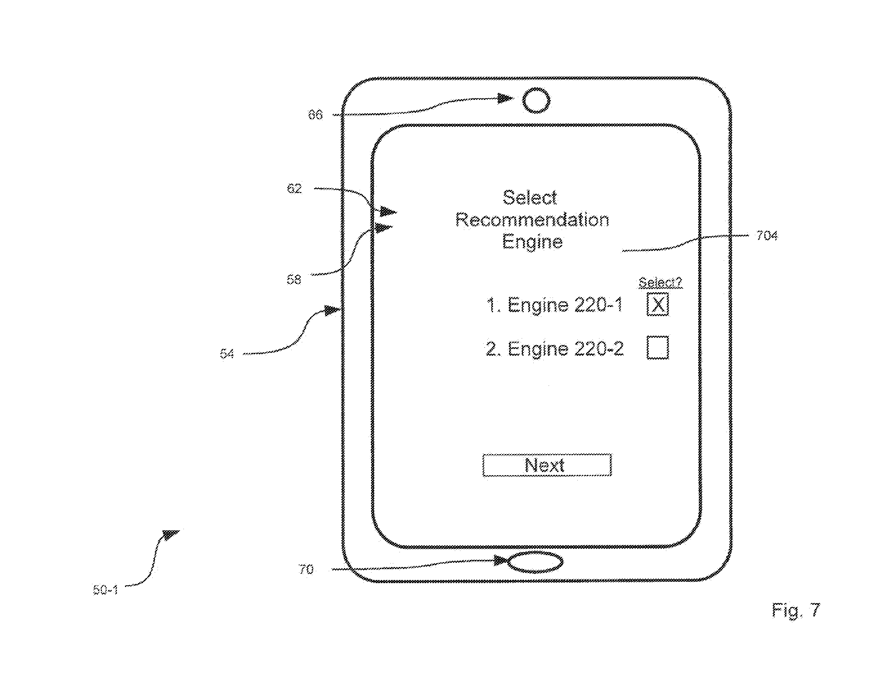

Referring now to Figure 7, display 58 is shown, under the control of processor 100, to generate output identifying possible recommendation engines that can be selected, and prompting for input to identify a selected recommendation engine. The example in Figure 7 is of course non-limiting, but serves as an example of how block 405 may be implemented. In the example of Figure 7, the choice of recommendation engine 220-1 or recommendation 220-2 is offered, and recommendation engine 220-1 is shown as having been selected.

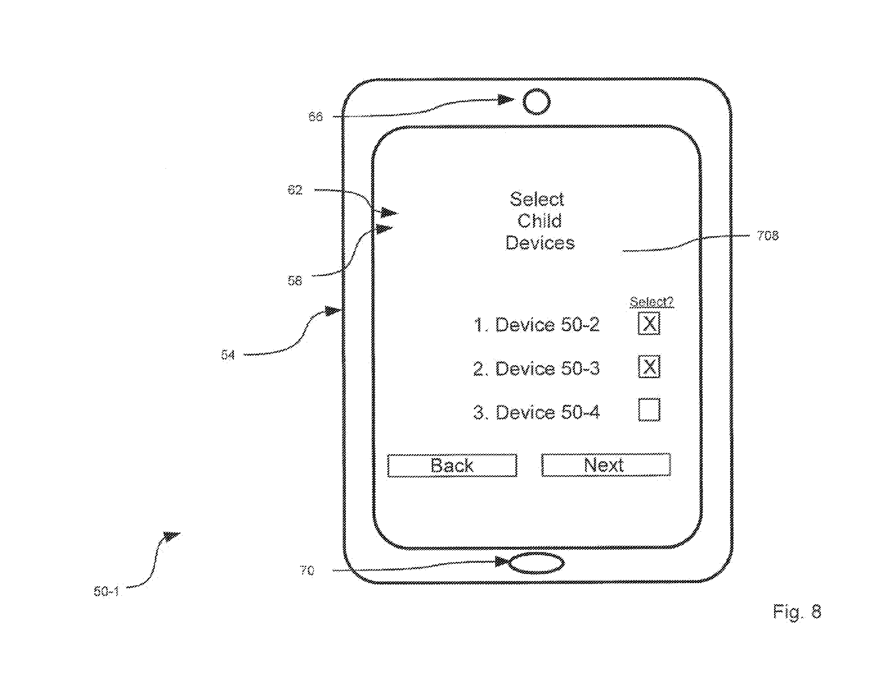

Referring now to Figure 8, display 58 is shown, under the control of processor 100, to generate output identifying possible child devices that can be selected, and prompting for input to identify one or more selected child devices. The example in Figure 8 is of course non-limiting, but serves as an example of how block 410 may be implemented. In the example of Figure 8, the choices of child device 50-2, child device 50-3 and child device 50-4 are offered, and child device 50-2 and child device 50-3 are shown as having been selected. (As discussed, in variations, instead of child devices being offered for selection, additional recommendation engines may be selected.) In variations, where social media application 124 is integrated with another social media application, then the display in Figure 8 shows a list of related relative identifiers that are indirectly associated with the possible list of child devices (e.g., user names associated with the child devices).

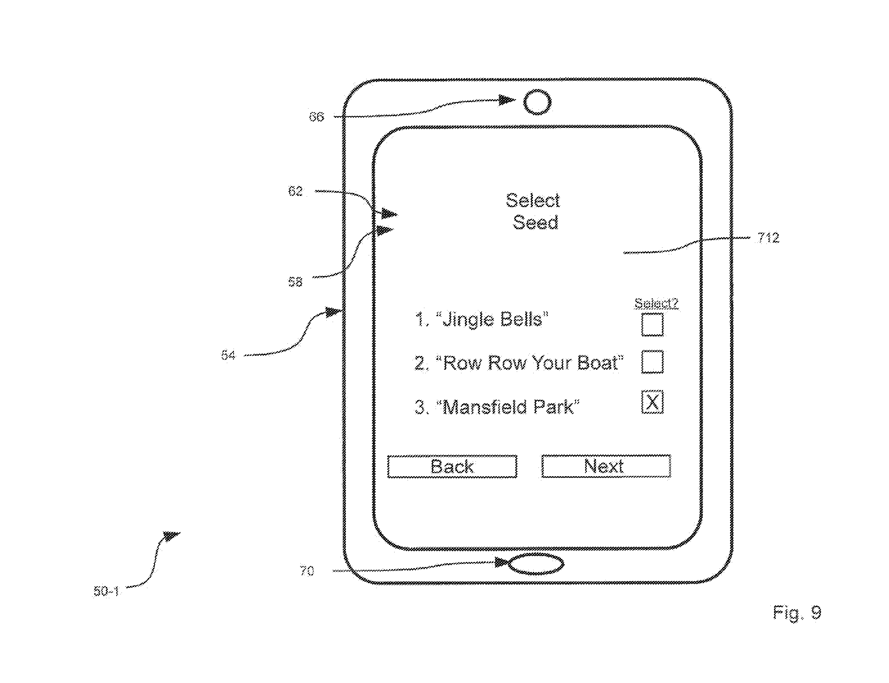

Referring now to Figure 9, display 58 is shown, under the control of processor 100, to generate output identifying possible seeds that can be selected, and prompting for input to identify a seed. (As discussed, in variations, multiple seeds may be selected.) The example in Figure 9 is of course non-limiting, but serves as an example of how block 415 may be implemented. In the example of Figure 9, the choices of "Jingle Bells", "Row Row Row Your Boat", and "Mansfield Park" are offered, and "Mansfield Park" is shown as having been selected. In variations, the selection of a possible seed is provided by means of a search dialog box where a desired selection may be entered as text and one or more results will be returned matching that requested search text, with the option of selecting one or more of the results as the seed.

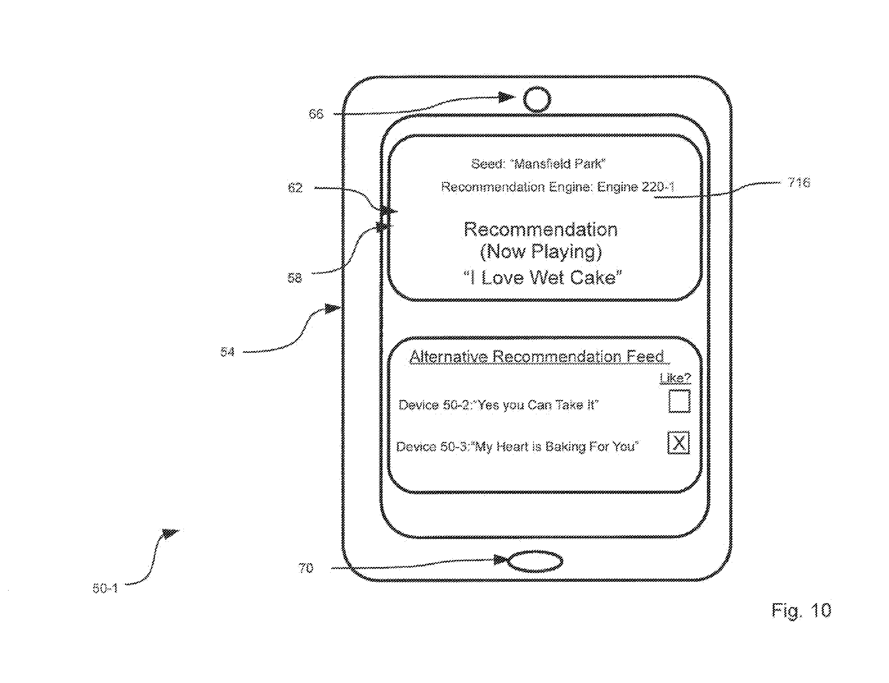

Referring now to Figure 10, display 58 is shown, under the control of processor 100, to generate output identifying a current recommendation from the selected recommendation engine, as well as identifying any alternative recommendations, in the form of a feed, that are being suggested by child device 50-2 or child device 50-3. The example in Figure 10 is of course non-limiting, but serves as an example of how display 58 on the root device 50-1 may appear at block 452 or block 455. In the example of Figure 10, the seed "Mansfield Park" and the recommendation offered by recommendation engine 220-1 (as generated thereby at block 425) is shown in the top portion of display 58. In the lower portion of display 58, the various recommendations that may be made at block 430 by the child devices 50 are shown in the form of a feed. In conjunction with the feed, there is a prompt for input to indicate whether a particular suggestion is liked. This prompt for input generally corresponds to block 453, block 454 and block 455. In the example of Figure 10, the alternative recommendation "My Heart is Baking For You", from device 50-3, is shown as having been selected. The inputted selected is then fed back into further iterations of method 400 or method 500, and in particular to block 450 or block 530, or both of them, as discussed above. The display in Figure 10 is then updated accordingly for such subsequent iterations.

While the foregoing provides certain non-limiting example embodiments, it should be understood that combinations, subsets, and variations of the foregoing are contemplated. For example, method 400 can be performed with the involvement of multiple recommendation engines 220, where one or more further recommendation engines 220 perform substantially the same function as a particular child device 50. Indeed, in this variation, child devices 50 may optionally be omitted altogether. To explain this variation more fully, assume again that device 50-1 is the root device, and assume also that recommendation engine 220-1 is a primary recommendation engine. However, also assume that recommendation engine 220-o serves the role of a child device 50, such that proposed alternative recommendations are automatically generated by recommendation engine 220-o, rather than via manual input at a given child device 50. In this manner, root device 50-1 can be used to optionally select different recommendations provided by a plurality of recommendation engines. By the same token, the multiple recommendation engines 220-o can receive responses indicating which recommendations are indicated as being preferred, and to update their local recommendation algorithms accordingly. It will now be apparent that a plurality of recommendations engines and a plurality of child devices 50 can be included in the performance of method 400 and method 600 or their variants.

The present specification thus provides a method, device and system to allow a plurality of devices and recommendation engines to participate in generating a media playlist. Playlist recommendations can be augmented with related yet novel content that is not contemplated by the recommendation engines. The technical solution can, incidentally, result in a novel experience and style interaction that result from users of child-devices having a channel to provide alternative recommendations to the recommendations originally proposed by a given recommendation engine. In turn such alternative recommendations can be iteratively and heuristically used to modify and update a particular recommendation algorithm for increased target accuracy. Feedback is contemplated in that once an alternative recommendation has been proposed, the recommendation engine can continue to suggest further recommendations based on both the provision of an original seed as well as based on the provision of alternative recommendations.

Certain implementations allow the group administrator that operates the root device to set the number of songs the recommendation engine suggests in order to control the experience. In addition, it may be possible for multiple competing recommendation engines to participate in the group as assigned by the user or the admin. A group administrator of the root device, or other users of the child devices, may after experimentation, settle on a preferred recommendation engine to act on the songs they submitted.

For example, assume a seed song is added to the collaborative playlist. All group members see this song (and can listen, depending on product specifics). In response to the song that has been added, a computerized recommendation engine submits a recommendation that is related to the submitted seed song. All group members see this recommendation song and can in turn participate by adding their own song. Similarly the system can be configured so that the members can access their own recommendation engines to generate their own recommendation song.

By allowing both users of child devices 50 and recommendation engines to participate in generating a playlist, the quality of playlist recommendations may be improved for accuracy, reducing the number of entries for skipped or banned songs that are typically managed by a recommendation engine, thereby reducing processing burden and bandwidth. Indeed, it is contemplated that in certain implementations, on subsequent invocations of method 400 there will be fewer alternative recommendations from child devices 50 as the recommendation engines 220 will learn and improve the accuracy of recommendations.

Another implementation contemplates that the teachings herein can be incorporated directly into an existing social network environment such as Facebook or BlackBerry Messenger, whereby a social network of devices can be used to provide a communication channel for a "chat", "stream" or "feed" relating to the seeded media and the recommendations therefrom. For each novel song placed into the feed by a member of the group, a recommendation engine can also step up and suggest a song.

In another variation, the seed defined at block 415 can be based on a plurality of seeds, with one seed being proposed by one or more of the root or child devices 50 that are participating in method 400. Thus, having provided a plurality of seeds, it is contemplated that the recommendation engine may be able to make further recommendations having the benefit of a plurality of seeds from one or more of the devices 50.

In another variation, the root device can be configured to administer and set permissions for the number of songs the recommendation engine may suggest or the number of songs that a given child device may receive as input for suggestions.

## Claims

1. An electronic device for social media communications comprising:
an input device;
a processor electrically coupled to said input device, said processor configured to receive an identifier for a recommendation engine configured to recommend media based on a media seed;
said processor further configured to receive electronic device identifiers for a set of child electronic devices;
said processor further configured to receive at least one media seed;
a network interface electrically coupled to said processor;
said processor further configured to send said at least one media seed to a recommendation engine via said network interface;
said processor further configured to receive at least one recommended media back from said recommendation engine in response to said at least one media seed;
said processor further configured to receive at least one alternative recommended media to said at least one recommended media from at least one of said child electronic devices;
said processor further configured to receive input from said input device representing a selection of said at least one alternative recommended media; and
said processor further configured to send said selection to said recommendation engine to generate at least one further recommended media based on said selection.

2. The device according to claim 1 wherein said media comprises one or more of music, audio, video and text.

3. The device according to claim 1 or claim 2 wherein the seed media comprises a plurality of works.

4. The device according to any one of claims 1-3 wherein the seed media is identified based on one or more of an artist, a title, a publisher, and a genre.

5. The device according to any one of claims 1-4 wherein said at least one alternative recommended media from one of said child electronic devices is generated by a recommendation engine associated with said one of said child electronic devices.

6. The device according to any one of claims 1-5 wherein said processor is further configured to generate a feed cumulative of said recommended media and said alternative recommended media.

7. A method for social media communications in a root electronic device comprising:
receiving an identifier for a recommendation engine configured to recommend media based on a media seed;
receiving identifiers for a set of child electronic devices;
receiving at least one media seed;
sending said at least one seed media to a recommendation engine;
receiving at least one recommended media back from said recommendation engine in response to said at least one media seed;
receiving at least one alternative recommended media to said at least one recommended media from at least one of said child electronic devices;
receiving input representing a selection of said at least one alternative recommended media; and,
sending said selection to said recommendation engine to generate at least one further recommended media based on said selection.

8. The method according to claim 7 wherein said media comprises one or more of music, audio, video and text.

9. The method according to claim 7 or claim 8 wherein the media seed comprises a plurality of works.

10. The method according to any one of claims 7-9 wherein the media seed is identified based on one or more of an artist, a title, a publisher, and a genre.

11. The method according to any one of claims 7-10 further comprising receiving at least one additional recommendation engine configured to suggest said at least one alternative recommended media.

12. The method according to any one of claims 7-11 wherein said at least one alternative recommended media from one of said child electronic devices is generated by a recommendation engine associated with said one of said child electronic devices.

13. The method according to any one of claims 7-12 further comprising automatically playing said at least one recommended media received from said recommendation engine.

14. The method according to any one of claims 7-13 further comprising comprises updating a recommendation algorithm at said recommendation engine to include the alternative recommended media.

15. A non-transitory computer readable medium configured to maintain a plurality of programming instructions executable on a processor of a root electronic device to perform a method for social media communications according to any one of claims 7-14.
